# EUROPÄISCHE PATENTSCHRIFT

(11) **EP 2 724 620 B1**
(45) Veröffentlichungstag und Bekanntmachung des Hinweises auf die Patenterteilung: **10.01.2018**
(21) Anmeldenummer: 12190119.3
(22) Anmeldetag: 26.10.2012
(51) Int. Cl.: A23D 9/013, A23D 9/05, C11C 5/00

(54) **OLEOCHEMISCHE ZUSAMMENSETZUNG**
OLEOCHMICAL COMPOSITION
COMPOSITION OLEOCHIMIQUE

(43) Veröffentlichungstag der Anmeldung: 30.04.2014
(73) Patentinhaber: Walter RAU Neusser Öl und Fett AG, 41460 Neuss (DE)
(72) Erfinder: Böschen, Friederike Gabriele, 40547 Düsseldorf (DE)
(74) Vertreter: Fabry, Bernd

(56) Entgegenhaltungen:
- WO-A1-97/43907
- WO-A1-02/092736
- WO-A1-2005/019398
- US-A1- 2003 057 599

## Beschreibung

### Gebiet der Erfindung

Die Erfindung befindet sich auf dem Gebiet der Oleochemie und betrifft neue Zusammensetzungen aus Glyceriden und Fettsäuren, die sich insbesondere für die Herstellung von Kerzen und als Paraffinersatz eignen.

### Stand der Technik

Der Mythos Kerze wirkt bis in unsere heutige Zeit, obwohl seit der Erfindung und Einführung des elektrischen Lichtes eine große Vielfalt unterschiedlichster Beleuchtungskörper zur Verfügung steht. Dennoch sind neben der christlichen Symbolik in der heutigen durch Hektik, Komplexität und Beschleunigung geprägten Zeit die festlich gedeckte Tafel, die gemütliche Kaffeerunde und die romantisch-stimmungsvollen Stunden stets mit dem Licht von Kerzen verbunden.

Der Abbrand einer Kerze und die Flamme selbst standen auch im Mittelpunkt von wissenschaftlichem Interesse. Der bekannte englische Naturforscher Michael Faraday hat in seinen Vorlesungen vor jungen Naturwissenschaftlern die Kerzenflamme als Mikrokosmos bezeichnet und dazu erklärt:" Unter den Gesetzen, nach denen unser Weltall in all seinen Teilen regiert wird, gibt es keines, das nicht auch bei der Naturgeschichte der Kerze in Betracht kommt."

Bis in die heutige Zeit wurden zahlreiche wissenschaftliche Untersuchungen zum Kerzenabbrand durchgeführt. Allen Kerzen gemeinsam ist ein saugfähiger Docht, meist aus geflochtenen Baumwollfäden, umgeben von Wachs. Nach Anzünden der Kerze schmilzt das Wachs. Durch die Kapillarwirkung des Dochts wird Wachs in die Flamme transportiert, wo es verdampft, um dann in Gegenwart von Sauerstoff zu verbrennen. Die Konvektion, das heißt das Aufsteigen der warmen Verbrennungsgase, versorgt die Flamme mit unverbrauchter Luft und gibt der Kerzenflamme die charakteristische langgestreckte Form. Die Kerze erlischt, wenn der Sauerstoffgehalt unter etwa 16 % sinkt.

Unter den Wachsen kommt dem Paraffin als billigstem Rohstoff die höchste Bedeutung zu. Die Verwendung von Paraffin als Material zur Herstellung von Kerzen ist jedoch aus zahlreichen Gründen von Nachteil: zum einen handelt es sich um einen nicht nachwachsenden und daher endlichen Rohstoff, bei dessen stofflicher Nutzung zusätzliches Kohlendioxid freigesetzt wird. Aus dem Stand der Technik sind jedoch auch alternative Kerzenformulierungen bekannt, die frei oder weitgehend frei von Paraffinen sind.

So beschreibt beispielsweise das US-Patent US 6,503,285 (Cargill) eine Wachszusammensetzung für Kerzen, die aus einem pflanzlichen Öl besteht. Aus der internationalen Patentanmeldung WO 2003 012016 A1 (Archer Daniels Midland) sind Wachszusammensetzungen bekannt, die zu 51 Gew.-% Pflanzenfette und zu 49 Gew.-% so genannte Kristallumwandler enthalten. Gegenstand des US-Patentes US 6,645,261 (Cargill) sind Kerzenwachse, die aus Palmitinsäure und gehärtetem Pflanzenöl bestehen. Gegenstand des US-Patentes US 7,601,184 (Tischendorf) ist ein Verfahren zur Herstellung von Kerzen, bei dem pflanzliche Öle zunächst gehärtet und dann verpresst werden. Keine dieser Kerzenzusammensetzungen ist jedoch in der Lage, die eingangs beschrieben Nachteile der aus dem Stand der Technik bekannten Paraffinkerzen zu überwinden. WO 02/092736 offenbart ein auf Triglyceriden basiertes Kerzenwachs und die Herstellung von Kerzen aus diesem Wachs. Das Wachs enthält ein Triglycerid, einen partiellen Ester eines Polyols, z.B. ein Monoglycerid und nicht mehr als 1,0 Gew.-% freie Fettsäuren. US 2003/057599 offenbart auf Triglyceriden basierte Wachszusammensetzungen mit einem Schmelzpunkt zwischen 50 und 57 °C. Ebenfalls beschrieben ist eine Methode, um Kerzen aus diesem Wachs herzustellen. Die Zusammensetzung enthalten weniger als 1,0 Gew.-% freie Fettsäuren. WO 2005/019398 offenbart eine Shortening-System auf Pflanzenölbasis, wobei das Pflanzenöl in nicht hydrierter oder partiell hydrierter Form verwendet wird und einen Anteil von 3-10% eines Mono- und/oder Diglycerids enthält. WO 97/43907 offenbart hydrierte Canolaöle mit einer verbesserten Oxidationsstabilität.

Die Aufgabe der vorliegenden Erfindung hat somit darin bestanden, oleochemische Zusammensetzungen zur Verfügung zu stellen, die frei von Paraffinen sind, ausschließlich auf nachwachsenden Rohstoffe beruhen und als Ersatz für Paraffinkohlenwasserstoffe tauglich sind, die einen Schmelzpunkt im Bereich von 35 bis 65 °C aufweisen. Insbesondere sollten die Zusammensetzung für die Herstellung von Kerzen geeignet sein und dabei weniger Ruß emittieren.

### Beschreibung der Erfindung

Gegenstand der Erfindung sind oleochemische Zusammensetzungen, enthaltend
(a) 70 bis 95 Gew.-% Triglyceride,
(b) 5 bis 15 Gew.-% Mono- und/oder Diglyceride und
(c) 5 bis 15 Gew.-% Fettsäuren, die sich dadurch auszeichnen, dass das Fettsäurespektrum der Komponenten (a), (b) und (c) im Wesentlichen eine Verteilung gemäß der folgenden **Tabelle 1** aufweist:

**Tabelle 1**

| Fettsäurespektren; alle Angaben als Gew.-% | | | | | | |
|---|---|---|---|---|---|---|
| | **A** | **B** | **C** | **D** | **E** | **F** |
| C12:0 | 0 bis 1 | 0 bis 1 | 0 bis 1 | 0 bis 1 | 0 bis 1 | 0 bis 1 |
| C14:0 | 0 bis 1 | 0 bis 1 | 0 bis 1 | 0 bis 1 | 0 bis 1 | 0 bis 1 |
| C16:0 | 0 bis 8 | 0 bis 8 | 0 bis 2 | 0 bis 2 | 5 bis 8 | 5 bis 8 |
| C17:0 | 0 bis 1 | 0 bis 1 | 0 bis 1 | 0 bis 1 | 0 bis 1 | 0 bis 1 |
| C17:1 | 0 bis 1 | 0 bis 1 | 0 bis 1 | 0 bis 1 | 0 bis 1 | 0 bis 1 |
| C18:0 | 15 bis 95 | 20 bis 70 | 15 bis 70 | 20 bis 50 | 50 bis 90 | 60 bis 80 |
| C18:1 | 20 bis 80 | 30 bis 55 | 20 bis 40 | 20 bis 40 | 70 bis 80 | 72 bis 75 |
| C18:2 | 0 bis 5 | 1 bis 2 | 0 bis 15 | 1 bis 2 | 0 bis 2 | 0 bis 1 |

| | **A** | **B** | **C** | **D** | **E** | **F** |
|---|---|---|---|---|---|---|
| C18:3 | 0 bis 1 | 0 bis 1 | 0 bis 1 | 0 bis 1 | 0 bis 1 | 0 bis 1 |
| C20:0 | 0 bis 2 | 0 bis 1 | 0 bis 2 | 0 bis 1 | 0 bis 2 | 0 bis 1 |
| C20:1 | 0 bis 1 | 0 bis 1 | 0 bis 1 | 0 bis 1 | 0 bis 1 | 0 bis 1 |
| C22:0 | 0 bis 5 | 0 bis 3 | 0 bis 5 | 0 bis 5 | 0 bis 2 | 0 bis 2 |
| C22:1 | 0 bis 1 | 0 bis 1 | 0 bis 1 | 0 bis 1 | 0 bis 1 | 0 bis 1 |

Dabei besteht die Maßgabe, dass sich sowohl die Mengenangaben (a+b+c) als auch die Zusammensetzungen in Tabelle 1 jeweils zu 100 Gew.-% ergänzen. Dies ist so verstehen, dass Ausführungsformen, die sich aus den Angaben in den Spalten rein rechnerisch zu Werten ergeben können, die von 100 abweichen, nicht von der Erfindung umfasst werden und deren Ausführbarkeit auch nicht in Frage stellen. Der Fachmann ist vielmehr in der Lage, innerhalb der Angaben zur Zusammensetzung der Fettsäurespektren solche Produkte durch Ausmischen herzustellen, die die Vorgaben erfüllen, ohne dass es dazu einer erfinderischen Tätigkeit bedürfte.

"Im Wesentlichen" bedeutet dabei, dass die Restmenge an weiteren Fettstoffen unter 0,5 Gew.-% liegt. Typisch sind die Zubereitungen völlig frei von weiteren Bestandteilen.

Dabei stellt die Ausgestaltung nach Spalte A die breiteste Ausführungsform der Erfindung dar, die Zusammensetzungen nach den Spalten B bis F repräsentieren bevorzugte Alternativen dar.

Überraschenderweise wurde gefunden, dass die erfindungsgemäßen Zubereitungen sich dadurch auszeichnen, dass sie vollständig und damit bei richtiger Einstellung des Dochtes unter verminderter Rußentwicklung verbrennen. Da sie vollständig auf Basis von nativen Fetten und Ölen, also nachwachsenden Rohstoffen bestehen, weisen sie gegenüber erdölbasierten Paraffinen die vorteilhaftere Ökobilanz auf, da sie kein zusätzliches Kohlendioxid freisetzen, sondern nur die Menge CO₂, die sie zuvor beim Wachstum der Pflanzen, aus denen sie gewonnen werden, chemisch gebunden hatten.

### Oleochemische Zusammensetzungen

### Triglyceride

Bei den Triglyceriden, die die Komponente (a) bilden, handelt es sich um pflanzliche Öle die zur Absenkung des Schmelzpunktes vollständig oder partiell gehärtet, d.h. hydriert worden sind. Die Zusammensetzung A gemäß Tabelle 1 wird beispielsweise durch gehärtetes bzw. teilgehärtetes Rapsöl erfüllt. Es ist aber ebenso möglich andere pflanzliche Fette und Öle nach Härtung oder Teilhärtung einzusetzen, die die Auswahlkriterien der Zusammensetzungen A bis F gemäß Tabelle 1 erfüllen. Beispiele hierfür sind etwa Palmöl, Olivenöl, Sonnenblumenöl, Distelöl, Leinöl, Reisöl und dergleichen.

### Partialglyceride

Die Partialglyceride, die die Komponente (b) bilden, dienen innerhalb der Zubereitungen als Emulgatoren und bewirken einen opaken Glanz auf den Endprodukten. Vorzugsweise setzen sich die Zusammensetzungen so zusammen, dass sie
(a) 80 bis 90 Gew.-% Triglyceride,
(b) 7 bis 12 Gew.-% Mono- und/oder Diglyceride und
(c) 5 bis 15 Gew.-% Fettsäuren,
mit der Maßgabe enthalten, dass sich die Mengenangaben zu 100 Gew.-% ergänzen. Dabei hat es sich für eine besonders homogene Verteilung der Triglyceride in der Mischung als vorteilhaft erwiesen, wenn die Mono- und Diglyceride im Gewichtsverhältnis von etwa 1:1,1 bis etwa 1:1,5 und insbesondere von etwa 1:1,2 enthalten sind.

Vorzugsweise stimmen die Fettsäurespektren der Triglyceride und Partialglyceride überein, d.h. die Partialglyceride wurden auf Basis der gleichen Triglyceride hergestellt, die die Komponente (a) bilden. Die Herstellung der Partialglyceride kann in an sich bekannter Weise erfolgen, beispielsweise durch Umesterung von gehärtetem Pflanzenfett mit Glycerin in Gegenwart eines alkalischen Katalysators bei Temperaturen im Bereich von 200 bis 250 °C. Anschließend kann nicht umgesetztes Glycerin abdestilliert oder durch Dämpfen entfernt werden.

### Fettsäuren

Auch die Fettsäuren, die die Komponente (c) bilden und als Kristallisationsbeschleuniger dienen, weisen vorzugsweise die gleiche C-Kettenverteilung wie die Triglyceride und Partialglyceride auf. Allerdings kann es hier von Vorteil sein, eine im Fettsäurespektrum abweichende Carbonsäure zuzusetzen, wenn es nämlich darum geht, den Schmelzpunkt oder besser gesagt den Schmelzbereich der Zusammensetzung im Hinblick auf die gewünschte Anwendung einzustellen. So führt die Zugabe von Palmitin-, Stearin- oder Behensäure dazu, dass die Zubereitungen bei höheren Temperaturen schmelzen, die Zugabe beispielsweise von Ölsäure hat den entgegengesetzten Effekt.

Die erfindungsgemäßen Zubereitungen zeichnen sich darüber hinaus dadurch besonders aus, dass sie einen Anteil an Der Schmelzpunkt der Zubereitungen liegt in der Regel im Bereich von 35 bis 65 und vorzugsweise 40 bis 60 °C.

Die Herstellung der Zubereitungen kann grundsätzlich durch Vermischen der Komponenten (a), (b) und (c) vorzugsweise in geschmolzenem Zustand erfolgen. Es ist jedoch grundsätzlich auch möglich, die Zubereitung in-situ herzustellen, indem man von gehärtetem oder teilgehärtetem Pflanzenfett ausgeht und dieses partiell verseift, so dass eine Mischung der Komponenten (a) und (b) resultiert. Ebenfalls möglich ist es, von Pflanzenfett mit ausreichend hoher Säurezahl, also einer Mischung der Komponenten (a) und (c) auszugehen und dieser dann die Partialglyceride der Gruppe (b) zuzusetzen.

Anschließend können die Zubereitungen - vorzugsweise im geschmolzenen Zustand - beispielsweise versprüht, granuliert oder auf eine Schuppenwalze gegeben werden, so dass sie schließlich in Form von Pellets, Pulvern oder Flocken vorliegen.

### Gewerbliche Anwendbarkeit

Eine weitere Ausführungsform der vorliegenden Erfindung ist auf Kerzen gerichtet, die die oleochemischen Zubereitungen enthalten. Dabei kann es sich um Guss-, Press- oder Extrusionsprodukte handeln.

Die Kerzen stellen erfindungsmäße Endprodukte dar, die zusätzlich die für diesen Anwendungszweck weiteren Inhaltsstoffe enthalten können, wie beispielsweise Bienenwachs, Stearin, natürliche Wachse, Farb- und Duftstoffe sowie natürlich den Docht.

### Bienenwachs

Bienenwachs ist ein Stoffwechselprodukt der Honigbiene und ist als ältester Kerzenrohstoff bekannt. Das Wachs wird an der Bauchseite der "Baubienen" ausgeschieden und zum Wabenbau eingesetzt. Die Farbe und den angenehmen Geruch bekommt das Bienenwachs im Laufe der Zeit durch Kontakt mit Honig und Pollen. Naturgemäß steht dieser Rohstoff nur begrenzt zur Verfügung und ist daher teuer. Bienenwachs besteht typischerweise aus einem Gemisch von:
70 Gew.-% Ester von C₂₄-C₄₄-Wachsalkohole mit C₁₆-C₁₈ Fettsäuren
13 bis 18 Gew.-% C₂₅-C₃₅-Kohlenwasserstoffe,
10 bis 15 Gew.-% C₂₄-C₃₂-Wachssäuren
Etwa 1 Gew.-% freie C₃₄-C₃₆-Wachsalkohole

Der Schmelzpunkt des Bienenwachses liegt bei ca. 65 °C. Weitere Kennzahlen sind die Säurezahl (17-24 mg KOH/g), die Verseifungszahl (87-104 mg KOH/g) sowie die Esterzahl (70-80 mg Koh/g). Seine Farbe schwankt von gelb über hell- und dunkelgrün bis rot- gelb und dunkelbraun. Es besitzt einen stumpfen, muscheligen, feinkörnigen Bruch, leichte Knetbarkeit, große Plastizität und ist in der Wärme klebrig. Natürliches Bienenwachs enthält eine Reihe von Verunreinigungen, die durch verschiedene Reinigungsverfahren entfernt werden können. Zumeist wird es danach noch einer Behandlung mit Bleicherde oder Wasserstoffperoxid unterworfen. Da dadurch Farbe und Geruch verloren gehen, werden hochreinem Bienenwachs aus Verbrauchergründen zum Teil Farb- und Duftstoffe wieder zugesetzt.

### Stearin

Stearin (griechisch *Stear*-Talg) ist ein unter Normalbedingungen festes, kristallines Gemisch verschiedener Fettsäuren, das im Wesentlichen aus Palmitin- und Stearinsäure besteht. Obwohl es wachsähnliche Eigenschaften besitzt, wird es normalerweise nicht den Wachsen zugeordnet. Ausgangsprodukte für die Herstellung von Stearin sind tierische bzw. pflanzliche Fette und Öle. Als pflanzlicher Rohstoff ist vorrangig Palmöl zu nennen. Tierische Rohstoffe sind hauptsächlich Rinder- und Schweinetalg, seltener Fischöl oder Fischfett. Die Kerzenhersteller setzen heute vorwiegend pflanzliche Stearine ein. In den Ausgangsstoffen liegen die Fettsäuren gebunden an Glycerin vor. Diese Triglyceride werden in einem kontinuierlichen Verfahren in Gegenwart von Wasser in Fettsäuren ans Glycerin gespalten. Nach Abtrennung der Glycerinanteile werden die Spaltsäuren durch die Verfahrensstufen Trennung, Hydrierung und fraktionierte Destillation in die verschiedenen technischen Stearingemische überführt. Dabei unterscheiden sich die einzelnen Stearintypen im Wese durch ihr Verhältnis von Palmitin- zu Stearinsäure. In Abhängigkeit von diesem Palmitinsäure- Stearinsäure-Verhältnis besitzen die Stearine ein unterschiedliches Kristallisationsverhalten (makro- und mikrokristalline Strukturen). Kontraktion und die Bildung dekorativer Oberflächeneffekte sind dadurch bedingte anwendungstechnische Eigenschaften. Der Erstarrungspunkt liegt im Bereich von 52°C bis 60°C. Weitere wichtige Kennzahlen sind die Säure-, Verseifungs- und Jodzahl sowie der Anteil an Unverseifbarem. Eine Besonderheit der Stearine besteht darin, dass Erweichungs- und Schmelzpunkt nahezu identisch sind (bei Paraffinen liegen beide Punkte ca. 15°C auseinander

### Weitere Zusatzstoffe

Neben den oben genannten Hauptrohstoffen wird eine Reihe von Zusatzstoffen zur Compoundierung von Kerzenmassen eingesetzt. Dabei handelt es sich im Wesentlichen um synthetische Wachse aus dem Bereich der Polymerchemie, wie z. B. Polyethylenwachse und Copolymerisate sowie hochschmelzende Fischer-Tropsch Paraffine. Zur Erzielung spezieller Effekte werden auch natürliche Wachse, z. B. Carnaubawachs, Montanwachs usw. als Zusatzstoffe eingesetzt. Farbstoffe, Lacke und Duftstoffe ergänzen die Palette der in Brennmassen bei der Kerzenherstellung verwendeten Materialien.

### Docht

Neben den Roh- und Zusatzstoffen für die Brennmassen steht der Docht im Mittelpunkt der Herstellung von Qualitätskerzen. Er beeinflusst entscheidend das Brennverhalten einer Kerze und ist Teil der Qualitätsdiskussion, insbesondere hinsichtlich seiner Zusammensetzung und der sich bildenden Verbrennungsprodukte. Der Docht besteht überwiegend aus geflochtenen Baumwollfasern, die mit zumeist anorganischen Verbindungen präpariert werden. Die baumwollfasern müssen eine gleichmäßige Struktur besitzen und dürfen keine Verschmutzungen enthalten. Benetzbarkeit, Kapillarbildung und möglichst vollständiges rückstandsfreies Verbrennen sind wichtige Qualitätsforderungen an die eingesetzte Baumwolle. Die anorganischen Bestandteile der Dochtpräparation bilden Mikroschmelzperlen an der Dochtspitze und verhindern das lange Weiterglühen des Dochtes nach dem Auslöschen. Durch die Bildung eines Kristallskeletts wird die Stabilität des Dochtes erhöht. Fadenstärke, Fadenanzahl und Flechtart (hier wird vor allem zwischen Flach- und Runddochten unterschieden) bestimmen das Saugverhalten und die Stabilität des Dochtes. Die Krümmung des Dochtes in der Flamme kann darüber hinaus durch das Einbringen spezieller Fäden beeinflusst werden. Entscheidend für ein optimales Abbrennverhalten der Kerze ist die richtige Einstellung zwischen eingesetztem Docht, verwendetem Kerzenmaterial und Kerzendurchmesser.

Ein weiterer Gegenstand der vorliegenden Erfindung betrifft die Verwendung der oleochemischen Zusammensetzungen zur Herstellung von Kerzen sowie als Ersatz für Paraffinkohlenwasserstoffe mit einem Schmelzpunkt im Bereich von 35 bis 65 °C, beispielsweise im Bereich der Kosmetik und Pharmazie (etwa zur Herstellung von Zäpfchen).

### Beispiele

### Beispiel 1

(a) 1000 g Rapsöl mit 6 Gew.-% gesättigten Fettsäuren, 66 Gew.-% einfach ungesättigten Fettsäuren und 28 Gew.-% mehrfach gesättigten Fettsäuren und einer Jodzahl von 98 wurde in Gegenwart in bekannter Weise an Nickel-Katalysatoren gehärtet. Die Jodzahl des gehärteten Rapsöls betrug anschließend nur noch 5.
(b) 1000 g Rapsöl der gleichen Zusammensetzung wie in Schritt (a) wurde in gleicher Weise partiell gehärtet, so dass ein teilgehärtetes Rapsöl mit einer Jodzahl von 41 erhalten wurde.
(c) 300 g Rapsöl der gleichen Zusammensetzung wie in Schritt (a) wurde mit 55 g Glycerin und 0,2 g 50 Gew.-%iger Natriumhydroxidlösung versetzt und unter Rühren und Stickstoffabdeckung langsam auf 240 °C erhitzt. Nach zwei Stunden Rührzeit wurde die Reaktionsmischung bis auf 80 °C abgekühlt und das nicht umgesetzte Glycerin durch Phasentrennung entfernt.
(d) 500 g des Härtungsproduktes aus (a), 250 g des teilgehärteten Produktes aus (b), 100 g des Partialglyceridgemisches aus (c) sowie 150 g Stearinsäure wurden im geschmolzenen Zustand unter intensivem Rühren vermischt und dann auf eine Schuppenwalze gegeben. Die fertige oleochemische Zusammensetzung wurde als schwach gelblich gefärbte Schuppen erhalten. Ihre Zusammensetzung ist in Tabelle 2, Formulierung (II) wiedergegeben.

Die Formulierungen (I), (III) und (IV) wurden unter Einsatz anderer pflanzlicher Öle in gleicher Weise erhalten und sind nicht Teil der Erfindung.

**Tabelle 2**

| Zusammensetzung und Kennzahlen oleochemischer Zubereitungen | | | | |
|---|---|---|---|---|
| **Zusammensetzung** | I | **II** | **II**I | **IV** |
| Triglyceride | 90,7 | 79,8 | 88,6 | 91,2 |
| Diglyceride | 2,0 | 4,2 | 6,2 | 1,3 |
| Monoglyceride | 1,7 | 3,4 | 5,1 | 1,9 |
| Freie Fettsäure | 5,6 | 12,6 | 0,1 | 5,6 |

| ***Fettsäureverteilung*** | | | | |
|---|---|---|---|---|
| C12:0 | 0 | 0 | 0 | 0,3 |
| C14:0 | 0,2 | 0,1 | 0,1 | 0,2 |
| C16:0 | 7,4 | 6,6 | 6,4 | 7,0 |
| C17:0 | 0 | 0 | 0 | 0 |
| C17:1 | 0 | 0 | 0 | 0 |

| **Zusammensetzung** | **I** | **II** | **III** | **IV** |
|---|---|---|---|---|
| C18:0 | 16,5 | 68,3 | 62,9 | 17,0 |
| C18:1 | 73,5 | 22,8 | 27,5 | 74,0 |
| C18:2 | 1,0 | 0,4 | 0,5 | 0,4 |
| C18:3 | 0 | 0 | 0,2 | 0 |
| C20:0 | 0,8 | 1,4 | 1,5 | 0,3 |
| C20:1 | 0,3 | 0 | 0,2 | 0 |
| C22:0 | 0,3 | 0,4 | 0,5 | 0,7 |
| C22:1 | 0 | 0 | 0,2 | 0,1 |

| ***Physikochemische Eigenschaften*** | | | | |
|---|---|---|---|---|
| Schmelzpunkt [°C] | 37,0 - 37,5 | 55,0 - 55,7 | 58,0 - 60,0 | 37,6 - 37,9 |
| Jodzahl | 64,3 | 18,3 | 25,3 | 58,8 |
| Lovibond Farbzahl (gelb/rot) | 11,0/1,8 | 12,0/1,9 | 16,0/2,4 | 3,8/0,6 |
| Oxidationsstabilität (120°C, 20L/min) [h] | 5,4 | 7,7 | 28,8 | 47,3 |

Für alle vier Zusammensetzungen wurde der Grenzwert des Ruß Indexes nach der Heil-Methode (http://www.heilmetalle.com/deutsch/document01.pdf) bestimmt. Für eine konventionelle Kerze auf Paraffinbasis liegt der Ruß Index (R1/h) bei 0,8 bis 0,9. Für die vier erfindungsgemäßen Zubereitungen wurden Indizes von unter 0,5 ermittelt, was zeigt, dass die Rußentwicklung bei optimaler Einstellung des Dochtes deutlich geringer ist.

## Patentansprüche

1. Oleochemische Zusammensetzung, enthaltend
(a) 70 bis 95 Gew.-% Triglyceride,
(b) 5 bis 15 Gew.-% Mono- und/oder Diglyceride und
(c) 5 bis 15 Gew.-% Fettsäuren,
**dadurch gekennzeichnet, dass** das Fettsäurespektrum der Komponenten (a), (b) und (c) im Wesentlichen folgende Verteilung aufweist:
| | | |
|---|---|---|
| C12:0 | 0 bis 1 | Gew.-% |
| C14:0 | 0 bis 1 | Gew.-% |
| C16:0 | 0 bis 8 | Gew.-% |
| C17:0 | 0 bis 1 | Gew.-% |
| C17:1 | 0 bis 1 | Gew:-% |
| C18:0 | 15 bis 95 | Gew.-% |
| C18:1 | 20 bis 80 | Gew.-% |
| C18:2 | 0 bis 5 | Gew.-% |
| C18:3 | 0 bis 1 | Gew.-% |
| C20:0 | 0 bis 2 | Gew.-% |
| C20:1 | 0 bis 1 | Gew.-% |
| C22:0 | 0 bis 5 | Gew.-% |
| C22:1 | 0 bis 1 | Gew.-% |
mit der Maßgabe, dass sich die Mengenangaben zu 100 Gew.-% ergänzen.

2. Zusammensetzung nach Anspruch 1, **dadurch gekennzeichnet, dass** sie im Wesentlichen folgendes Fettsäurespektrum aufweist:
| | | |
|---|---|---|
| C12:0 | 0 bis 1 | Gew.-% |
| C14:0 | 0 bis 1 | Gew.-% |
| C16:0 | 0 bis 8 | Gew.-% |
| C17:0 | 0 bis 1 | Gew.-% |
| C17:1 | 0 bis 1 | Gew:-% |
| C18:0 | 20 bis 70 | Gew.-% |
| C18:1 | 30 bis 55 | Gew.-% |
| C18:2 | 1 bis 2 | Gew.-% |
| C18:3 | 0 bis 1 | Gew.-% |
| C20:0 | 0 bis 1 | Gew.-% |
| C20:1 | 0 bis 1 | Gew.-% |
| C22:0 | 0 bis 3 | Gew.-% |
| C22:1 | 0 bis 1 | Gew.-% |

3. Zusammensetzung nach Anspruch 1, **dadurch gekennzeichnet, dass** sie im Wesentlichen folgendes Fettsäurespektrum aufweist:
| | | |
|---|---|---|
| C12:0 | 0 bis 1 | Gew.-% |
| C14:0 | 0 bis 1 | Gew.-% |
| C16:0 | 0 bis 2 | Gew.-% |
| C17:0 | 0 bis 1 | Gew.-% |
| C17:1 | 0 bis 1 | Gew:-% |
| C18:0 | 15 bis 70 | Gew.-% |
| C18:1 | 20 bis 40 | Gew.-% |
| C18:2 | 0 bis 5 | Gew.-% |
| C18:3 | 0 bis 1 | Gew.-% |
| C20:0 | 0 bis 2 | Gew.-% |
| C20:1 | 0 bis 1 | Gew.-% |
| C22:0 | 0 bis 5 | Gew.-% |
| C22:1 | 0 bis 1 | Gew.-% |
mit der Maßgabe, dass sich die Mengenangaben zu 100 Gew.-% ergänzen.

4. Zusammensetzung nach Anspruch 1, **dadurch gekennzeichnet, dass** sie im Wesentlichen folgendes Fettsäurespektrum aufweist:
| | | |
|---|---|---|
| C12:0 | 0 bis 1 | Gew.-% |
| C14:0 | 0 bis 1 | Gew.-% |
| C16:0 | 0 bis 2 | Gew.-% |
| C17:0 | 0 bis 1 | Gew.-% |
| C17:1 | 0 bis 1 | Gew:-% |
| C18:0 | 20 bis 50 | Gew.-% |
| C18:1 | 20 bis 40 | Gew.-% |
| C18:2 | 1 bis 2 | Gew.-% |
| C18:3 | 0 bis 1 | Gew.-% |
| C20:0 | 0 bis 1 | Gew.-% |
| C20:1 | 0 bis 1 | Gew.-% |
| C22:0 | 0 bis 5 | Gew.-% |
| C22:1 | 0 bis 1 | Gew.-% |
mit der Maßgabe, dass sich die Mengenangaben zu 100 Gew.-% ergänzen.

5. Zusammensetzung nach Anspruch 1, **dadurch gekennzeichnet, dass** sie im Wesentlichen folgendes Fettsäurespektrum aufweist:
| | | |
|---|---|---|
| C12:0 | 0 bis 1 | Gew.-% |
| C14:0 | 0 bis 1 | Gew.-% |
| C16:0 | 5 bis 8 | Gew.-% |
| C17:0 | 0 bis 1 | Gew.-% |
| C17:1 | 0 bis 1 | Gew:-% |
| C18:0 | 50 bis 90 | Gew.-% |
| C18:1 | 75 bis 80 | Gew.-% |
| C18:2 | 0 bis 2 | Gew.-% |
| C18:3 | 0 bis 1 | Gew.-% |
| C20:0 | 0 bis 2 | Gew.-% |
| C20:1 | 0 bis 1 | Gew.-% |
| C22:0 | 0 bis 2 | Gew.-% |
| C22:1 | 0 bis 1 | Gew.-% |
mit der Maßgabe, dass sich die Mengenangaben zu 100 Gew.-% ergänzen.

6. Zusammensetzung nach Anspruch 1, **dadurch gekennzeichnet, dass** sie im Wesentlichen folgendes Fettsäurespektrum aufweist:
| | | |
|---|---|---|
| C12:0 | 0 bis 1 | Gew.-% |
| C14:0 | 0 bis 1 | Gew.-% |
| C16:0 | 5 bis 8 | Gew.-% |
| C17:0 | 0 bis 1 | Gew.-% |
| C17:1 | 0 bis 1 | Gew:-% |
| C18:0 | 60 bis 80 | Gew.-% |
| C18:1 | 72 bis 75 | Gew.-% |
| C18:2 | 0 bis 1 | Gew.-% |
| C18:3 | 0 bis 1 | Gew.-% |
| C20:0 | 0 bis 1 | Gew.-% |
| C20:1 | 0 bis 1 | Gew.-% |
| C22:0 | 0 bis 2 | Gew.-% |
| C22:1 | 0 bis 1 | Gew.-% |
mit der Maßgabe, dass sich die Mengenangaben zu 100 Gew.-% ergänzen.

7. Zusammensetzung nach mindestens einem der Ansprüche 1 bis 6, **dadurch gekennzeichnet, dass** sie
(a) 80 bis 90 Gew.-% Triglyceride,
(b) 7 bis 12 Gew.-% Mono- und/oder Diglyceride und
(c) 5 bis 15 Gew.-% Fettsäuren,
mit der Maßgabe enthalten, dass sich die Mengenangaben zu 100 Gew.-% ergänzen.

8. Zusammensetzung nach mindestens einem der Ansprüche 1 bis 7, **dadurch gekennzeichnet, dass** sie Mono- und Diglyceride im Gewichtsverhältnis 1:1,1 bis 1:1,5 enthalten.

9. Zusammensetzung nach mindestens einem der Ansprüche 1 bis 8, **dadurch gekennzeichnet, dass** sie einen Anteil an Unverseifbarem (UV) von weniger als 1 Gew.-% aufweisen.

10. Zusammensetzungen nach mindestens einem der Ansprüche 1 bis 9, **dadurch gekennzeichnet, dass** sie einen Schmelzpunkt im Bereich von 35 bis 65 °C aufweisen

11. Zusammensetzung nach mindestens einem der Ansprüche 1 bis 10, **dadurch gekennzeichnet, dass** sie als Pellets, Pulver oder Flocken vorliegen.

12. Kerzen, enthaltend die oleochemische Zusammensetzung nach einem der Ansprüche 1 bis 6.

13. Kerzen nach Anspruch 12, **dadurch gekennzeichnet, dass** es sich um Guss-, Press- oder Extrusionsprodukte handelt.

14. Verwendung einer oleochemischen Zusammensetzung nach mindestens einem der Ansprüche 1 bis 6 zur Herstellung von Kerzen.

15. Verwendung einer oleochemischen Zusammensetzung nach mindestens einem der Ansprüche 1 bis 6 als Ersatz für Paraffinkohlenwasserstoffe mit einem Schmelzpunkt im Bereich von 35 bis 65 °C.

## Claims

1. Oleochemical composition, comprising
(a) 70 to 95 wt.-% triglycerides,
(b) 5 to 15 wt.-% mono- and/or diglycerides and
(c) 5 to 15 wt.-% fatty acids,
**characterized in that,** the fatty acid spectrum of the components (a), (b) and (c) substantially possesses the following distribution:
| | | |
|---|---|---|
| C12:0 | 0 to 1 | wt.-% |
| C14:0 | 0 to 1 | wt.-% |
| C16:0 | 0 to 8 | wt.-% |
| C17:0 | 0 to 1 | wt.-% |
| C17:1 | 0 to 1 | wt.-% |
| C18:0 | 15 to 95 | wt.-% |
| C18:1 | 20 to 80 | wt.-% |
| C18:2 | 0 to 5 | wt.-% |
| C18:3 | 0 to 1 | wt.-% |
| C20:0 | 0 to 2 | wt.-% |
| C20:1 | 0 to 1 | wt.-% |
| C22:0 | 0 to 5 | wt.-% |
| C22:1 | 0 to 1 | wt.-% |
with the proviso that the quantities add up to 100 wt.-%.

2. The composition according to claim 1, **characterized in that,** it substantially has the following fatty acid spectrum:
| | | |
|---|---|---|
| C12:0 | 0 to 1 | wt.-% |
| C14:0 | 0 to 1 | wt.-% |
| C16:0 | 0 to 8 | wt.-% |
| C17:0 | 0 to 1 | wt.-% |
| C17:1 | 0 to 1 | wt.-% |
| C18:0 | 20 to 70 | wt.-% |
| C18:1 | 30 to 55 | wt.-% |
| C18:2 | 1 to 2 | wt.-% |
| C18:3 | 0 to 1 | wt.-% |
| C20:0 | 0 to 1 | wt.-% |
| C20:1 | 0 to 1 | wt.-% |
| C22:0 | 0 to 3 | wt.-% |
| C22:1 | 0 to 1 | Wt.-% |

3. The composition according to claim 1, **characterized in that,** it substantially has the following fatty acid spectrum:
| | | |
|---|---|---|
| C12:0 | 0 to 1 | wt.-% |
| C14:0 | 0 to 1 | wt.-% |
| C16:0 | 0 to 2 | wt.-% |
| C17:0 | 0 to 1 | wt.-% |
| C17:1 | 0 to 1 | wt.-% |
| C18:0 | 15 to 70 | wt.-% |
| C18:1 | 20 to 40 | wt.-% |
| C18:2 | 0 to 5 | wt.-% |
| C18:3 | 0 to 1 | wt.-% |
| C20:0 | 0 to 2 | wt.-% |
| C20:1 | 0 to 1 | wt.-% |
| C22:0 | 0 to 5 | wt.-% |
| C22:1 | 0 to 1 | wt.-% |
with the proviso that the quantities add up to 100 wt.-%.

4. The composition according to claim 1, **characterized in that,** it substantially has the following fatty acid spectrum:
| | | |
|---|---|---|
| C12:0 | 0 to 1 | wt.-% |
| C14:0 | 0 to 1 | wt.-% |
| C16:0 | 0 to 2 | wt.-% |
| C17:0 | 0 to 1 | wt.-% |
| C17:1 | 0 to 1 | wt.-% |
| C18:0 | 20 to 50 | wt.-% |
| C18:1 | 20 to 40 | wt.-% |
| C18:2 | 1 to 2 | wt.-% |
| C18:3 | 0 to 1 | wt.-% |
| C20:0 | 0 to 1 | wt.-% |
| C20:1 | 0 to 1 | wt.-% |
| C22:0 | 0 to 5 | wt.-% |
| C22:1 | 0 to 1 | wt.-% |
with the proviso that the quantities add up to 100 wt.-%.

5. The composition according to claim 1, **characterized in that,** it substantially has the following fatty acid spectrum:
| | | |
|---|---|---|
| C12:0 | 0 to 1 | wt.-% |
| C14:0 | 0 to 1 | wt.-% |
| C16:0 | 5 to 8 | wt.-% |
| C17:0 | 0 to 1 | wt.-% |
| C17:1 | 0 to 1 | wt.-% |
| C18:0 | 50 to 90 | wt.-% |
| C18:1 | 75 to 80 | wt.-% |
| C18:2 | 0 to 2 | wt.-% |
| C18:3 | 0 to 1 | wt.-% |
| C20:0 | 0 to 2 | wt.-% |
| C20:1 | 0 to 1 | wt.-% |
| C22:0 | 0 to 2 | wt.-% |
| C22:1 | 0 to 1 | wt.-% |
with the proviso that the quantities add up to 100 wt.-%.

6. The composition according to claim 1, **characterized in that,** it substantially has the following fatty acid spectrum:
| | | |
|---|---|---|
| C12:0 | 0 to 1 | wt.-% |
| C14:0 | 0 to 1 | wt.-% |
| C16:0 | 5 to 8 | wt.-% |
| C17:0 | 0 to 1 | wt.-% |
| C17:1 | 0 to 1 | wt.-% |
| C18:0 | 60 to 80 | wt.-% |
| C18:1 | 72 to 75 | wt.-% |
| C18:2 | 0 to 1 | wt.-% |
| C18:3 | 0 to 1 | wt.-% |
| C20:0 | 0 to 1 | wt.-% |
| C20:1 | 0 to 1 | wt.-% |
| C22:0 | 0 to 2 | wt.-% |
| C22:1 | 0 to 1 | wt.-% |
with the proviso that the quantities add up to 100 wt.-%.

7. The composition according to at least one of claims 1 to 6, **characterized in that,** it comprises
(a) 80 to 90 wt.-% triglycerides,
(b) 7 to 12 wt.-% mono- and/or diglycerides and
(c) 5 to 15 wt.-% fatty acids,
with the proviso that the quantities add up to 100 wt.-%.

8. The composition according to at least one of claims 1 to 7, **characterized in that,** it comprises mono- and diglycerides in a ratio by weight of 1:1.1 to 1:1.5.

9. The composition according to at least one of claims 1 to 8, **characterized in that,** it has less than 1 wt. -% of unsaponifiables.

10. The composition according to at least one of claims 1 to 9, **characterized in that,** it has a melting point in the range of from 35 to 65 °C.

11. The composition according to at least one of claims 1 to 10, **characterized in that,** it is in the form of pellets, powder or flake.

12. Candles, comprising the oleochemical composition according to any one of claims 1 to 6.

13. Candles according to claim 12, **characterized in that,** it is cast-, press- or extruded- product.

14. Use of the oleochemical composition according to at least one of claims 1 to 6 in the production of candles.

15. Use of the oleochemical composition according to at least one of claims 1 to 6 as substitute for paraffin hydrocarbons with a melting point in the range of from 35 to 65 °C.

## Revendications

1. Composition oléochimique, contenant :
(a) 70 à 95 % en poids de triglycérides,
(b) 5 à 15 % en poids de mono- et/ou diglycérides et
(c) 5 à 15 % en poids d'acides gras,
**caractérisée en ce que** le spectre d'acides gras des composants (a), (b) et (c) présente essentiellement la distribution suivante :
| | | |
|---|---|---|
| C12:0 | 0 à 1 | % en poids |
| C14:0 | 0 à 1 | % en poids |
| C16:0 | 0 à 8 | % en poids |
| C17:0 | 0 à 1 | % en poids |
| C17:1 | 0 à 1 | % en poids |
| C18:0 | 15 à 95 | % en poids |
| C18:1 | 20 à 80 | % en poids |
| C18:2 | 0 à 5 | % en poids |
| C18:3 | 0 à 1 | % en poids |
| C20:0 | 0 à 2 | % en poids |
| C20:1 | 0 à 1 | % en poids |
| C22:0 | 0 à 5 | % en poids |
| C22:1 | 0 à 1 | % en poids |
à condition que la somme des données de quantité soit de 100 % en poids.

2. Composition selon la revendication 1, **caractérisée en ce qu'**elle présente essentiellement le spectre d'acides gras suivant :
| | | |
|---|---|---|
| C12:0 | 0 à 1 | % en poids |
| C14:0 | 0 à 1 | % en poids |
| C16:0 | 0 à 8 | % en poids |
| C17:0 | 0 à 1 | % en poids |
| C17:1 | 0 à 1 | % en poids |
| C18:0 | 20 à 70 | % en poids |
| C18:1 | 30 à 55 | % en poids |
| C18:2 | 1 à 2 | % en poids |
| C18:3 | 0 à 1 | % en poids |
| C20:0 | 0 à 1 | % en poids |
| C20:1 | 0 à 1 | % en poids |
| C22:0 | 0 à 3 | % en poids |
| C22:1 | 0 à 1 | % en poids. |

3. Composition selon la revendication 1, **caractérisée en ce qu'**elle présente essentiellement le spectre d'acides gras suivant :
| | | |
|---|---|---|
| C12:0 | 0 à 1 | % en poids |
| C14:0 | 0 à 1 | % en poids |
| C16:0 | 0 à 2 | % en poids |
| C17:0 | 0 à 1 | % en poids |
| C17:1 | 0 à 1 | % en poids |
| C18:0 | 15 à 70 | % en poids |
| C18:1 | 20 à 40 | % en poids |
| C18:2 | 0 à 5 | % en poids |
| C18:3 | 0 à 1 | % en poids |
| C20:0 | 0 à 2 | % en poids |
| C20:1 | 0 à 1 | % en poids |
| C22:0 | 0 à 5 | % en poids |
| C22:1 | 0 à 1 | % en poids, |
à condition que la somme des données de quantité soit de 100 % en poids.

4. Composition selon la revendication 1, **caractérisée en ce qu'**elle présente essentiellement le spectre d'acides gras suivant :
| | | |
|---|---|---|
| C12:0 | 0 à 1 | % en poids |
| C14:0 | 0 à 1 | % en poids |
| C16:0 | 0 à 2 | % en poids |
| C17:0 | 0 à 1 | % en poids |
| C17:1 | 0 à 1 | % en poids |
| C18:0 | 20 à 50 | % en poids |
| C18:1 | 20 à 40 | % en poids |
| C18:2 | 0 à 2 | % en poids |
| C18:3 | 0 à 1 | % en poids |
| C20:0 | 0 à 1 | % en poids |
| C20:1 | 0 à 1 | % en poids |
| C22:0 | 0 à 5 | % en poids |
| C22:1 | 0 à 1 | % en poids, |
à condition que la somme des données de quantité soit de 100 % en poids.

5. Composition selon la revendication 1, **caractérisée en ce qu'**elle présente essentiellement le spectre d'acides gras suivant :
| | | |
|---|---|---|
| C12:0 | 0 à 1 | % en poids |
| C14:0 | 0 à 1 | % en poids |
| C16:0 | 5 à 8 | % en poids |
| C17:0 | 0 à 1 | % en poids |
| C17:1 | 0 à 1 | % en poids |
| C18:0 | 50 à 90 | % en poids |
| C18:1 | 75 à 80 | % en poids |
| C18:2 | 0 à 2 | % en poids |
| C18:3 | 0 à 1 | % en poids |
| C20:0 | 0 à 2 | % en poids |
| C20:1 | 0 à 1 | % en poids |
| C22:0 | 0 à 2 | % en poids |
| C22:1 | 0 à 1 | % en poids, |
à condition que la somme des données de quantité soit de 100 % en poids.

6. Composition selon la revendication 1, **caractérisée en ce qu'**elle présente essentiellement le spectre d'acides gras suivant :
| | | |
|---|---|---|
| C12:0 | 0 à 1 | % en poids |
| C14:0 | 0 à 1 | % en poids |
| C16:0 | 5 à 8 | % en poids |
| C17:0 | 0 à 1 | % en poids |
| C17:1 | 0 à 1 | % en poids |
| C18:0 | 60 à 80 | % en poids |
| C18:1 | 72 à 75 | % en poids |
| C18:2 | 0 à 1 | % en poids |
| C18:3 | 0 à 1 | % en poids |
| C20:0 | 0 à 1 | % en poids |
| C20:1 | 0 à 1 | % en poids |
| C22:0 | 0 à 2 | % en poids |
| C22:1 | 0 à 1 | % en poids, |
à condition que la somme des données de quantité soit de 100 % en poids.

7. Composition selon au moins l'une quelconque des revendications 1 à 6, **caractérisée en ce qu'**elle contient
(a) 80 à 90 % en poids de triglycérides,
(b) 7 à 12 % en poids de mono- et/ou diglycérides et
(c) 5 à 15 % en poids d'acides gras,
à condition que la somme des données de quantité soit de 100 % en poids.

8. Composition selon au moins l'une quelconque des revendications 1 à 7, **caractérisée en ce qu'**elle contient des mono- et diglycérides en un rapport en poids de 1:1,1 à 1:1,5.

9. Composition selon au moins l'une quelconque des revendications 1 à 8, **caractérisée en ce qu'**elle comprend une proportion d'insaponifiables (UV) inférieure à 1 % en poids.

10. Composition selon au moins l'une quelconque des revendications 1 à 9, **caractérisée en ce qu'**elle présente un point de fusion dans la plage allant de 35 à 65 °C.

11. Composition selon au moins l'une quelconque des revendications 1 à 10, **caractérisée en ce qu'**elle se présente sous la forme de pastilles, de poudres ou de flocons.

12. Bougies, contenant la composition oléochimique selon l'une quelconque des revendications 1 à 6.

13. Bougies selon la revendication 12, **caractérisées en ce qu'**il s'agit de produits coulés, comprimés ou extrudés.

14. Utilisation d'une composition oléochimique selon au moins l'une quelconque des revendications 1 à 6 pour la fabrication de bougies.

15. Utilisation d'une composition oléochimique selon au moins l'une quelconque des revendications 1 à 6 en tant que substitut d'hydrocarbures paraffiniques ayant un point de fusion dans la plage allant de 35 à 65 °C.
